# EUROPÄISCHE PATENTSCHRIFT

(11) **EP 4 366 992 B1**
(45) Veröffentlichungstag und Bekanntmachung des Hinweises auf die Patenterteilung: **02.12.2026**
(21) Anmeldenummer: 22750658.1
(22) Anmeldetag: 23.06.2022
(51) Int. Cl.: B60T 8/32, B60T 13/66, B60T 13/68

(54) **BREMSSYSTEM FÜR EIN KRAFTFAHRZEUG**
BRAKING SYSTEM FOR A MOTOR VEHICLE
SYSTÈME DE FREINAGE POUR VÉHICULE AUTOMOBILE

(30) Priorität: 09.07.2021 DE 102021207277
(43) Veröffentlichungstag der Anmeldung: 15.05.2024
(73) Patentinhaber: AUMOVIO Germany GmbH, 60488 Frankfurt am Main (DE)
(72) Erfinder: BILLER, Harald, 60488 Frankfurt am Main (DE); ULLRICH, Thorsten, 60488 Frankfurt am Main (DE); COURTH, Christian, 60488 Frankfurt am Main (DE); SCHELLER, Tobias, 60488 Frankfurt am Main (DE); SCHMIDT, Holger, 60488 Frankfurt am Main (DE)
(74) Vertreter: Aumovio Corporation
(86) Internationale Anmeldenummer: PCT/DE2022/200138
(87) Internationale Veröffentlichungsnummer: WO 2023/280354

(56) Entgegenhaltungen:
- DE-A1- 102017 216 617
- DE-A1- 102017 219 598
- DE-A1- 102018 208 223
- DE-A1- 102019 207 955
- DE-A1- 102019 219 158

## Beschreibung

Die Erfindung betrifft ein Bremssystem gemäß dem Oberbegriff von Anspruch 1.

Aus der DE 10 2017 216 617 A1 ist ein Bremssystem für vier hydraulisch betätigbare Radbremsen bekannt mit einem elektrisch betätigbaren Einlass- und Auslassventil je Radbremse und einem Druckmittelvorratsbehälter mit einer ersten Behälterkammer und einem zugeordneten ersten Anschluss und mit einer zweiten Behälterkammer und einem zugeordneten zweiten Anschluss. Um für das hochautomatisierte Fahren geeignet zu sein und auf eine mechanische und/oder hydraulische Rückfallebene, in welcher der Fahrer durch Muskelkraft die Radbremsen betätigt kann, verzichten zu können, umfasst das Bremssystem eine erste und eine zweite elektrisch ansteuerbare hydraulische Druckquelle. Die Auslassventile des Bremssystems sind über eine Rücklaufleitung mit dem ersten Anschluss des Druckmittelvorratsbehälters verbunden. Der Druckraum der ersten Druckquelle ist mittels eines Schnüffellochs und eines Rückschlagventils über eine gemeinsame Nachsaugleitung mit dem zweiten Anschluss des Druckmittelvorratsbehälters verbunden.

Aus der DE 10 2018 208 223 A1 ist ein Bremssystem mit vier hydraulisch betätigbaren Radbremsen bekannt. Zum aktiven Druckaufbau in den Radbremsen ist ein erster und ein zweiter Bremskreis hydraulisch mit jeweils zwei Radbremsen ausgebildet und in jedem Bremskreis ist jeweils eine Druckbereitstellungseinrichtung mit zwei Radbremsen hydraulisch verbunden. Der Druckraum der als Linearaktuator ausgeführten Druckbereitstellungseinrichtung ist über eine Ansaugleitung mit Rückschlagventil mit dem Druckmittelvorratsbehälter verbunden sowie in unbetätigtem Zustand des Kolbens über Schnüffellöcher mit dem Druckmittelvorratsbehälter verbunden.

In der DE 10 2019 207 955 A1 wird ein elektronisches Bremssystem mit einem Hauptzylinder, einer Hydraulikdruck-Zuführungsvorrichtung mit zwei Druckkammern und einem Behälter zum Speichern von Öl beschrieben, wobei der Behälter in drei getrennte Behälterkammern unterteilt ist, wobei die zwei Druckkammern der Hydraulikdruck-Zuführungsvorrichtung mit der zweiten Behälterkammer verbunden sind.

Es ist Aufgabe der vorliegenden Erfindung, ein alternatives, für das hochautomatisierte Fahren geeignetes Bremssystem für ein Kraftfahrzeug bereitzustellen, welches auf eine mechanische und/oder hydraulische Rückfallebene verzichten kann und dabei dennoch eine hohe Verfügbarkeit, insbesondere im Fall einer Leckage, besitzt und so eine ausreichende Sicherheit für hochautomatisiertes Fahren bzw. eine Autopilotfunktion bietet. Weiterhin soll das Bremssystem eine möglichst geringe Baugröße besitzen.

Diese Aufgabe wird beispielsgemäß durch ein Bremssystem gemäß Anspruch 1 gelöst.

Der Erfindung liegt bezüglich des Bremssystems der Gedanke zugrunde, dass das Bremssystem mehrere hydraulische Ausgangsanschlüsse für hydraulisch betätigbare Radbremsen, einen unter Atmosphärendruck stehenden Druckmittelvorratsbehälter mit einer ersten Behälterkammer und einer zweiten Behälterkammer, wobei der ersten Behälterkammer ein erster Anschluss des Druckmittelvorratsbehälters zugeordnet ist und der zweiten Behälterkammer ein zweiter Anschluss des Druckmittelvorratsbehälters zugeordnet ist und wobei die erste und die zweite Behälterkammer durch eine Schottwand zumindest teilweise voneinander getrennt sind, und eine elektrisch ansteuerbare hydraulische Druckquelle umfasst, welche durch eine Zylinder-Kolben-Anordnung mit einem Druckraum und einem Kolben gebildet wird, wobei der Kolben mittels eines Elektromotors vor- und zurückschiebbar ist, wobei die Druckquelle einen Nachsauganschluss zum Nachsaugen von Druckmittel aus dem Druckmittelvorratsbehälter und einen Ausgleichsanschluss zur hydraulischen Verbindung des Druckraums mit dem Druckmittelvorratsbehälter in einer vorgegebenen Position des Kolbens umfasst, wobei ein Druckanschluss der Druckquelle mit den hydraulischen Ausgangsanschlüssen verbunden ist, wobei der Nachsauganschluss über ein Nachsaugventil mit dem ersten Anschluss des Druckmittelvorratsbehälters verbunden ist und der Ausgleichsanschluss mit dem zweiten Anschluss des Druckmittelvorratsbehälters verbunden ist.

Das Bremssystem bietet den Vorteil, dass durch die Trennung von Nachsauganschluss und erster Behälterkammer einerseits und Ausgleichsanschluss und zweiter Behälterkammer andererseits die Verfügbarkeit des Bremssystems, insbesondere im Fall einer Leckage, verbessert wird.

Bevorzugt umfasst das Bremssystem zumindest vier hydraulische Ausgangsanschlüssen für zumindest vier hydraulisch betätigbare Radbremsen.

Bevorzugt umfasst das Bremssystem ein elektrisch betätigbares Einlassventil je Ausgangsanschluss. Besonders bevorzugt sind die Einlassventile stromlos offen ausgeführt.

Bevorzugt ist der Druckanschluss der Druckquelle mit einem Bremsleitungsabschnitt verbunden, an welchen die Einlassventile angeschlossen sind.

Bevorzugt umfasst das Bremssystem ein elektrisch betätigbares Auslassventil je Ausgangsanschluss. Besonders bevorzugt sind die Auslassventile stromlos geschlossen ausgeführt.

Bevorzugt umfasst das Bremssystem eine erste elektronische Steuer- und Regeleinheit und eine zweite elektronische Steuer- und Regeleinheit, wobei der Elektromotor der Druckquelle von der ersten und der zweiten elektronischen Steuer- und Regeleinheit ansteuerbar ist. Da der Elektromotor der Druckquelle bzw. dessen Betätigung redundant ausgebildet ist, bietet das Bremssystem den Vorteil, dass der Elektromotor der Druckquelle bei Ausfall einer der elektronischen Steuer- und Regeleinheiten von der anderen elektronischen Steuer- und Regeleinheit angesteuert werden kann, um einen Bremsdruck zur Durchführung einer Betriebsbremsung bereitzustellen. Durch die Kombination einer redundant ansteuerbaren Druckquelle und der speziellen Anbindung der Druckquelle an die Behälterkammern des Druckmittelvorratsbehälters wird ein besonders vorteilhaftes Bremssystem bereitgestellt, welches für hochautomatisiertes Fahren geeignet ist, eine hohe Verfügbarkeit, insbesondere im Fall einer Leckage, besitzt und eine geringe Baugröße besitzt.

Gemäß einer bevorzugten Ausführungsform des erfindungsgemäßen Bremssystems sind die Druckquelle und die elektronischen Steuer- und Regeleinheiten derart ausgebildet, dass bei einem Ausfall der ersten elektronischen Steuer- und Regeleinheit die Druckquelle mittels der zweiten elektronischen Steuer- und Regeleinheit angesteuert wird und einen Druck zur Betätigung der Radbremsen aufbaut, und dass bei einem Ausfall der zweiten elektronischen Steuer- und Regeleinheit die Druckquelle mittels der ersten elektronischen Steuer- und Regeleinheit angesteuert wird und einen Druck zur Betätigung der Radbremsen aufbaut.

Gemäß einer bevorzugten Ausführungsform des erfindungsgemäßen Bremssystems umfasst die Druckquelle einen doppelt gewickelten Elektromotor mit einer ersten Motorwicklung und einer zweiten Motorwicklung, wobei die erste Motorwicklung, besonders bevorzugt ausschließlich, von der ersten elektronischen Steuer- und Regeleinheit und die zweite Motorwicklung, besonders bevorzugt ausschließlich, von der zweiten elektronischen Steuer- und Regeleinheit angesteuert wird. So kann auf eine zweite elektrisch ansteuerbare hydraulische Druckquelle verzichtet werden. Auch nach einem elektrischen oder elektronischen Einzelfehler ist es möglich, die Radbremsen zu bremsen. Der doppelt gewickelte Elektromotor umfasst also eine erste Motorwicklung und eine zweite Motorwicklung, wobei jede der beiden Motorwicklungen jeweils von einer der beiden elektronischen Steuer- und Regeleinheiten angesteuert wird. In gewissem Sinne ist der Elektromotor zweiteilig ausgeführt. Werden beide Motorwicklungen von beiden elektronischen Steuer- und Regeleinheiten angesteuert, liefert der Elektromotor die volle Leistung. Im Falle, dass nur eine der beiden elektronischen Steuer- und Re¬geleinheiten die entsprechende Motorwicklung ansteu¬ert, kann die Druckquelle Druck aufbauen, wenn auch in verminderter Höhe und mit verminderter Dynamik, wobei mit diesem Druck die Radbremsen beaufschlagt werden. Das Fahrzeug kann dennoch abgebremst und zum Stillstand gebracht werden.

Bevorzugt ist eine Feder des Nachsaugventils derart dimensioniert, dass das Nachsaugventil von einem hydrostatischen Druck in der ersten Behälterkammer nicht geöffnet werden kann.

Bevorzugt umfasst der Ausgleichsanschluss ein Schnüffelloch oder ist als ein Schnüffelloch ausgebildet. Besonders bevorzugt ist der Druckraum der Druckquelle in einem unbetätigten Zustand des Kolbens über das Schnüffelloch mit der zweiten Behälterkammer des Druckmittelvorratsbehälters verbunden, wobei das Schnüffelloch bei einer Betätigung des Kolbens geschlossen wird, so dass die hydraulische Verbindung zur zweiten Behälterkammer getrennt wird.

Bevorzugt ist der Ausgleichsanschluss über einen Nachlaufleitungsabschnitt mit dem zweiten Anschluss des Druckmittelvorratsbehälters verbunden. Besonders bevorzugt ist der Ausgleichsanschluss ausschließlich mit dem zweiten Anschluss des Druckmittelvorratsbehälters verbunden. Der Nachlaufleitungsabschnitt ist besonders bevorzugt nicht mit dem ersten Anschluss des Druckmittelvorratsbehälters verbunden.

Zum Nachsaugen von Druckmittel in den Druckraum der Druckquelle ist bevorzugt der Druckraum unabhängig vom Betätigungszustand der Druckquelle über den Nachsauganschluss und das Nachsaugventil mit der ersten Behälterkammer des Druckmittelvorratsbehälters hydraulisch verbunden.

Bevorzugt ist das Nachsaugventil als ein in Richtung des Druckraums öffnendes Rückschlagventil ausgeführt. Eine elektrische Ansteuerung entfällt so.

Bevorzugt ist der Druckraum in einer unbetätigten Position des Kolbens hydraulisch mit der zweiten Behälterkammer des Druckmittelvorratsbehälters verbunden. Die vorgegebene Position des Kolbens ist somit eine unbetätigte Position des Kolbens.

Die Auslassventile sind bevorzugt über eine Rücklaufleitung mit dem ersten Anschluss des Druckmittelvorratsbehälters verbunden, also mit demselben Anschluss des Druckmittelvorratsbehälters wie der Nachsauganschluss der Druckquelle.

Um Bohrungen im Ventilblock einzusparen, ist der Nachsauganschluss bevorzugt über das Nachsaugventil mit der Rücklaufleitung verbunden. Besonders bevorzugt ist der Nachsauganschluss über das Nachsaugventil und einen Ansaugleitungsabschnitt mit der Rücklaufleitung verbunden.

Gemäß einer bevorzugten Ausführungsform des erfindungsgemäßen Bremssystems ist zwischen dem Druckraum der Druckquelle und jedem der Einlassventile kein elektrisch betätigbares Ventil, insbesondere kein Ventil, angeordnet. So wird ein möglichst kompaktes Bremssystem erreicht und die Anzahl der elektrisch ansteuerbaren Ventile reduziert.

Bevorzugt umfasst das Bremssystem neben den Einlass- und Auslassventilen keine weiteren elektrisch betätigbaren Ventile.

Bevorzugt ist keinem der Einlassventile ein Rückschlagventil parallelgeschaltet und keines der Einlassventile umfasst ein integriertes Rückschlagventil.

Gemäß einer alternativen bevorzugten Ausführungsform des erfindungsgemäßen Bremssystems ist der Druckraum der Druckquelle über ein elektrisch betätigbares, besonders bevorzugt stromlos offenes, Trennventil mit dem Bremsleitungsabschnitt verbunden, an welchen die Einlassventile angeschlossen sind.

Bevorzugt ist jedem der Einlassventile ein Rückschlagventil parallelgeschaltet oder jedes der Einlassventile umfasst ein integriertes Rückschlagventil.

Bevorzugt ist dem Trennventil ein in Richtung der Einlassventile öffnendes Rückschlagventil parallelgeschaltet. So kann auch bei fehlerhaft geschlossenem Trennventil ein Druckaufbau an den Radbremsen durchgeführt werden.

Bevorzugt wird jedes elektrisch ansteuerbare Ventil des Bremssystems von der ersten elektronischen Steuer- und Regeleinheit betätigt.

Bevorzugt umfasst das Bremssystem, insbesondere nur, einen Drucksensor, mittels welchem der von der Druckquelle erzeugte Druck bestimmt wird. Weitere Drucksensoren, z.B. zur Bestimmung eines Radbremsdruckes sind nicht notwendig. Besonders bevorzugt bestimmt der Drucksensor einen Druck druckquellenseitig der Einlassventile. Besonders bevorzugt werden die Signale des Drucksensors der ersten elektronischen Steuer- und Regeleinheit zugeführt und von dieser ausgewertet. Das Druckwert der Druckquelle steht somit der (ersten) elektronischen Steuer- und Regeleinheit zur Verfügung, welche auch die Einlass- und Auslassventile zur Regelung der Radbremsdrücke ansteuert.

Gemäß einer Weiterbildung umfasst das Bremssystem redundante Elemente zur Erfassung einer Drehzahl oder eines Drehwinkels des Elektromotors, wobei die Signale eines der redundanten Elemente der einen elektronischen Steuer- und Regeleinheit zugeführt und von dieser ausgewertet werden und die Signale des anderen redundanten Elementes der anderen elektronischen Steuer- und Regeleinheit zugeführt und von dieser ausgewertet werden.

Bevorzugt umfasst das Bremssystem einen ersten Sensor zur Erfassung eines Drehwinkels oder einer Drehzahl des Elektromotors und einen unabhängigen zweiten Sensor zur Erfassung eines Drehwinkels oder einer Drehzahl des Elektromotors, wobei die Signale des ersten Sensors der zweiten elektronischen Steuer- und Regeleinheit zugeführt und von dieser ausgewertet werden und die Signale des zweiten Sensors der ersten elektronischen Steuer- und Regeleinheit zugeführt und von dieser ausgewertet werden.

Das Bremssystem umfasst bevorzugt keine weitere elektrisch ansteuerbare hydraulische Druckquelle.

Das Bremssystem umfasst bevorzugt keine weitere hydraulische Druckquelle. Das Bremssystem umfasst z.B. keine bremspedalbetätigbare hydraulische Druckquelle, insbesondere keinen Hauptbremszylinder, welcher mittels eines Bremspedals betätigbar ist und mit den Radbremsen verbindbar ist.

Bevorzugt wird das Bremssystem von einer ersten elektrischen Energieversorgung und von einer zweiten, von der ersten Energieversorgung unabhängigen, elektrischen Energieversorgung versorgt.

Bevorzugt wird die erste elektronische Steuer- und Regeleinheit von einer ersten elektrischen Energieversorgung versorgt und die zweite elektronische Steuer- und Regeleinheit von einer zweiten, von der ersten Energieversorgung unabhängigen, elektrischen Energieversorgung versorgt.

Die erste elektronische Steuer- und Regeleinheit und die zweite elektronische Steuer- und Regeleinheit sind bevorzugt voneinander elektrisch unabhängig in dem Sinne, dass ein Ausfall der ersten elektronischen Steuer- und Regeleinheit keinen Ausfall der zweiten elektronischen Steuer- und Regeleinheit bewirkt und umgekehrt.

Bevorzugt sind die elektrisch ansteuerbare hydraulische Druckquelle und die Einlass- und Auslassventile in einem einzigen hydraulischen Ventilblock angeordnet.

Bevorzugt sind die elektrisch ansteuerbare hydraulische Druckquelle, die Einlass- und Auslassventile und die elektronischen Steuer- und Regeleinheiten in einem einzigen Bremsensteuergerät angeordnet. Das Bremsensteuergerät umfasst weiterhin besonders bevorzugt den Drucksensor, das Rückschlagventil und den ersten und zweiten Sensor zur Erfassung eines Drehwinkels oder einer Drehzahl des Elektromotors.

Gemäß einer bevorzugten Weiterbildung des erfindungsgemäßen Bremssystems umfasst dieses eine Betätigungseinheit für einen Fahrzeugführer, wobei die Betätigungseinheit mit zumindest einer der elektronischen Steuer- und Regeleinheiten zur Übermittlung eines Fahrerwunschsignals verbunden ist. Dabei besteht keine mechanisch-hydraulische Verbindung von der Betätigungseinheit zu den hydraulisch betätigbare Radbremsen (z.B. keine hydraulische Rückfallebene).

Bevorzugt umfasst das Bremssystem eine erste elektrisch betätigbare Parkbremse und eine zweite elektrisch betätigbare Parkbremse, welche einer Fahrzeugachse, insbesondere der Hinterachse, des Kraftfahrzeugs zugeordnet sind. Besonders bevorzugt wird die erste elektrisch betätigbare Parkbremse von der ersten elektronischen Steuer- und Regeleinheit betätigt und die zweite elektrisch betätigbare Parkbremse von der zweiten elektronischen Steuer- und Regeleinheit betätigt. So wird eine redundante Parkbremsfunktion erreicht.

Weitere bevorzugte Ausführungsformen der Erfindung ergeben sich aus den Unteransprüchen und der nachfolgenden Beschreibung anhand von Figuren.

Es zeigen schematisch
Fig. 1 ein erstes Ausführungsbeispiel eines erfindungsgemäßen Bremssystems, und
Fig. 2 ein zweites Ausführungsbeispiel eines erfindungsgemäßen Bremssystems.

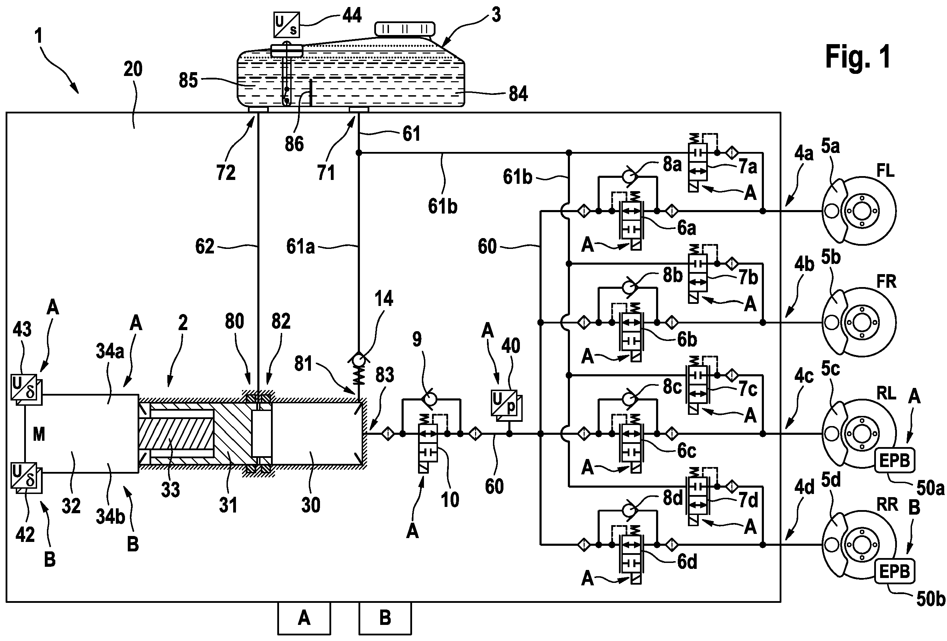

In Fig. 1 ist ein erstes Ausführungsbeispiel eines erfindungsgemäßen Bremssystems 1 für ein Kraftfahrzeug mit vier hydraulisch betätigbaren Radbremsen 5a-5d schematisch dargestellt.

Bremssystem 1 umfasst vorteilhafterweise ein Bremsensteuergerät (HECU) mit einem Hydraulikblock 20 (hydraulische Steuer- und Regeleinheit HCU, Ventilblock) mit einem Ausgangsanschluss 4a-4d für jede der Radbremsen 5a-5d. An dem Ventilblock 20 ist ein unter Atmosphärendruck stehender Druckmittelvorratsbehälter 3 angeordnet. Beispielsgemäß sind die Ausgangsanschlüsse 4a, 4b den Radbremsen 5a, 5b der Vorderachse (Front), z.B. der Ausgangsanschluss 4a dem linken Vorderrad **FL** (Radbremse 5a) und der Ausgangsanschluss 4b dem rechten Vorderrad **FR** (Radbremse 5b), zugeordnet und die Ausgangsanschlüsse 4c, 4d den Radbremsen 5c, 5d der Hinterachse (Rear) zugeordnet, z.B. der Ausgangsanschluss 4c dem linken Hinterrad **RL** (Radbremse 5c) und der Ausgangsanschluss 4d dem rechten Hinterrad **RR** (Radbremse 5d).

Der Füllstand des Druckmittelvorratsbehälters 3 wird mittels eines Füllstandsensors 44 gemessen.

Der Druckmittelvorratsbehälter 3 umfasst zumindest zwei Behälterkammern 84, 85, welche durch eine Schottwand 86 zumindest teilweise voneinander getrennt sind. Weiterhin umfasst der Druckmittelvorratsbehälter 3 einen ersten Anschluss 71 und einen zweiten Anschluss 72. Der erste Anschluss 71 ist mit der ersten Behälterkammer 84 verbunden, der zweite Anschluss 72 ist mit der zweiten Behälterkammer 85 verbunden. **In** diesem Sinne ist der ersten Behälterkammer 84 ein erste Anschluss 71 des Druckmittelvorratsbehälters 3 zugeordnet und der zweiten Behälterkammer 85 ist der zweite Anschluss 72 des Druckmittelvorratsbehälters 3 zugeordnet.

Jedem Ausgangsanschluss 4a-4d ist ein Einlassventil 6a-6d sowie ein Auslassventil 7a-7d zugeordnet, wobei die Einlassventile 6a-6d vorteilhafterweise stromlos offen und die Auslassventile 7a-7d vorteilhafterweise stromlos geschlossen ausgeführt sind. Jedem Einlassventil 6a-6d ist beispielsgemäß ein in Richtung der Ausgangsanschluss 4a-4d bzw. Radbremsen 5a-5d schließendes Rückschlagventil 8a-8d parallelgeschaltet.

Über das Auslassventil 7a-7d ist der jeweilige Ausgangsanschluss 4a-4d mit dem Druckmittelvorratsbehälter 3 verbunden. Die Auslassventile 7a-7d sind über eine (zumindest stückweise gemeinsame) Rücklaufleitung 61b, 61 an den ersten Anschluss 71 des Druckmittelvorratsbehälters 3 angeschlossen.

Es ist eine elektrisch ansteuerbare hydraulische Druckquelle 2 vorgesehen, welche durch eine Zylinder-Kolben-Anordnung mit einem Druckraum 30 gebildet wird, deren Kolben 31 durch einen elektromechanischen Aktuator mit einem schematisch angedeuteten Elektromotor 32 und einem schematisch dargestellten Rotations-Translations¬getriebes 33 betätigt betätigbar ist. Druckquelle 2 ist beispielsgemäß als ein einkreisiger elektrohydraulischer Linearaktuator (LAC) mit nur einem Druckraum 30 ausgebildet. Kolben 31 kann mittels des elektromechanischen Aktuators zum Aufbau eines Druckes vorgeschoben (Bremsbetätigungsrichtung) und zum Abbau eines Druckes zurückgeschoben bzw. zurückgezogen werden.

Beispielsgemäß ist der Elektromotor als ein doppelt gewickelter Elektromotor 32 mit einer ersten Motorwicklung 34a und einer zweiten Motorwicklung 34b ausgebildet. Werden beide Motorwicklungen 34a, 34b angesteuert, liefert Elektromotor 32 die volle Leistung. Im Falle, dass nur eine der beiden Motorwicklungen 34a, 34b angesteu¬ert wird, ist die Leistung des Elektromotors 32 zwar reduziert, es kann aber dennoch Druck mittels der Druckquelle 2 aufgebaut werden, wenn auch in verminderter Höhe und mit verminderter Dynamik.

Druckraum 30 ist über einen Druckanschluss 83 mit einem Bremsleitungsabschnitt 60 hydraulisch verbunden, welcher mit den Einlassventilen 6a-6d (genauer den Eingangsanschlüssen der Einlassventile 6a-6d) hydraulisch verbunden ist. In der hydraulischen Verbindung zwischen dem Druckraum 30 der Druckquelle 2 und dem Bremsleitungsabschnitt 60 bzw. jedem der Einlassventile 6a-6d ist beispielsgemäß ein elektrisch betätigbares, z.B. stromlos offenes, Trennventil 10 angeordnet. Beispielsgemäß ist dem Trennventil 10 ein in Richtung der Einlassventile 6a-6d bzw. der Radbremsen 5a-5d öffnendes Rückschlagventil 9 parallelgeschaltet.

Zum Nachsaugen von Druckmittel aus dem Druckmittelvorratsbehälter 3 in die Druckquelle 2 weist Druckquelle 2 einen Nachsauganschluss 81 auf. Druckraum 30 ist über den Nachsauganschluss 81 und ein Nachsaugventil 14, welches beispielsgemäß als ein in Richtung des Druckraums 30 öffnendes Rückschlagventil ausgeführt ist, mit dem ersten Anschluss 71 des Druckmittelvorratsbehälters 3 und somit mit der ersten Behälterkammer 84 des Druckmittelvorratsbehälters 3 verbunden.

Weiterhin weist Druckquelle 2 einen Ausgleichsanschluss 82 zur hydraulischen Verbindung des Druckraums 30 mit dem Druckmittelvorratsbehälter 3 in einer vorgegebenen Position des Kolbens 31 auf. Hierdurch ist ein Drucklosschalten der Radbremsen 5a-5d, d.h. ein Verbinden der Radbremsen 5a-5d mit dem unter Atmosphärendruck stehenden Druckmittelvorratsbehälter 3, in der vorgegebenen Position des Kolbens 31 möglich. Die vorgegebene Position des Kolbens 31 ist vorteilhafterweise der unbetätigte Zustand des Kolbens 31. Ausgleichsanschluss 82 ist mit der anderen (zweiten) Behälterkammer 85, also dem zweiten Anschluss 72, des Druckmittelvorratsbehälters 3 verbunden.

Beispielsgemäß weist Druckquelle 2 als Ausgleichsanschluss 82 ein Schnüffelloch 80 auf. Schnüffelloch 80 ist über einen Nachlaufleitungsabschnitt 62 mit dem zweiten Anschluss 72 des Druckmittelvorratsbehälters 3 verbunden. Druckraum 30 ist in einem unbetätigten Zustand des Kolbens 31 über das Schnüffelloch 80 und den Nachlaufleitungsabschnitt 62 mit der zweiten Behälterkammer 85 des Druckmittelvorratsbehälters 3 verbunden, wobei das Schnüffelloch 80 bei einer Betätigung des Kolbens 31 überfahren / geschlossen wird und so die Verbindung zum Druckmittelvorratsbehälter 3 getrennt wird. Beispielsgemäß ist der Kolben 31 mit zumindest einer Bohrung versehen, über welche im unbetätigten Zustand des Kolbens 31 die hydraulische Verbindung zwischen Druckraum 30 und Nachlaufleitungsabschnitt 62 hergestellt ist, und welche bei einer Betätigung des Kolbens 31 eine Dichtung überfährt, so dass die hydraulische Verbindung zwischen Druckraum 30 und Nachlaufleitungsabschnitt 62 getrennt wird.

Beispielsgemäß sind die Rücklaufleitung 61b, 61 für die Auslassventile 7a-7d und eine Ansaugleitung 61a, 61 der Druckquelle 2 stückweise gemeinsam ausgeführt. Hierzu ist Nachsauganschluss 81 über das Nachsaugventil 14 und einen Ansaugleitungsabschnitt 61a mit der Rücklaufleitung 61b, 61 verbunden. Die Auslassventile 7a-7d und das Nachsaugventil 14 sind also über einen gemeinsamen Leitungsabschnitt 61 mit dem ersten Anschluss 71 des Druckmittelvorratsbehälters 3 verbunden. Anders ausgedrückt münden der Ansaugleitungsabschnitt 61a und ein Rücklaufleitungsabschnitt 61b in den Leitungsabschnitt 61 zum ersten Anschluss 71. **In** diesem Sinne ist der Druckraum 30 über das Nachsaugventil 14 und den Ansaugleitungsabschnitt 61a mit der Rücklaufleitung 61b, 61 (aus Rücklaufleitungsabschnitt 61b und Leitungsabschnitt 61) verbunden.

Der Nachlaufleitungsabschnitt 62 und der Ansaugleitungsabschnitt 61a (bzw. die Rücklaufleitung 61b, 61 oder der Rücklaufleitungsabschnitt 61b oder der Leitungsabschnitt 61) sind nicht direkt miteinander verbunden. Es besteht nur eine gewisse indirekt hydraulische Verbindung über den Druckmittelvorratsbehälter 3, falls der Füllstand des Druckmittelvorratsbehälters 3 oberhalb der Schottwand 86 liegt.

Die Ansaugleitung 61a, 61 der Druckquelle 2 ist nicht mit dem zweiten Anschluss 72 des Druckmittelvorratsbehälters 3 verbunden.

An den Bremsleitungsabschnitt 60 ist ein (System)Drucksensor 40 angeschlossen, mittels welchem der von der Druckquelle 2 erzeugte Druck bestimmt werden kann. Bevorzugt ist der Drucksensor 40 der einzige Drucksensor des Bremssystems 1 bzw. des Bremsensteuergeräts.

Zur Ansteuerung der Druckquelle 2 umfasst Bremssystem 1 redundante Sensorelemente zur Erfassung einer Drehzahl oder eines Drehwinkels des Elektromotors 32. Beispielsgemäß sind ein erster Motorwinkelsensor 43 und ein zweiter Motorwinkelsensor 42 vorgesehen.

Bremssystem 1 umfasst vorteilhafterweise nur die eine hydraulische Druckquelle 2. Bremssystem 1 umfasst weder eine zweite elektrisch ansteuerbare hydraulische Druckquelle noch eine vom Fahrer betätigbare Druckquelle, z.B. einen bremspedalbetätigbaren Hauptbremszylinder, zur Realisierung einer hydraulischen, fahrerbetätigten Rückfallebene.

Bremssystem 1 umfasst weiterhin eine erste elektronische Steuer- und Regeleinheit (ECU) A und eine zweite elektronische Steuer- und Regeleinheit (ECU) B zur Ansteuerung der elektrisch betätigbaren Komponenten des Bremssystems 1. Die erste elektronische Steuer- und Regeleinheit A und die zweite elektronische Steuer- und Regeleinheit B sind vorteilhafterweise voneinander elektrisch unabhängig in dem Sinne, dass ein Ausfall der ersten elektronischen Steuer- und Regeleinheit keinen Ausfall der zweiten elektronischen Steuer- und Regeleinheit bewirkt und umgekehrt. Hierzu können die elektronischen Steuer- und Regeleinheiten A und B als getrennte Einheiten ausgeführt sein, sie können jedoch auch in derselben elektronischen Steuer- und Regeleinheit als unabhängige Untereinheiten ausgeführt sein.

Die Pfeile A oder B an den elektrischen oder elektrisch betätigbaren Komponenten, wie z.B. den Ventilen 10, 6a-6d, 7a-7d und den Sensoren 40, 42, 43, 44 kennzeichnen die Zuordnung zur elektronischen Steuer- und Regeleinheit A oder B.

Der Elektromotor 32 der Druckquelle 2 ist von der ersten und der zweiten elektronischen Steuer- und Regeleinheit A, B ansteuerbar, d.h. jede der elektronischen Steuer- und Regeleinheiten A, B ist für sich alleine zum Aufbau eines Bremsdruckes mittels der Druckquelle 2 zur Durchführung einer Betriebsbremsung geeignet. D.h. die Druckquelle 2 und die elektronischen Steuer- und Regeleinheiten A, B sind derart ausgebildet, dass bei einem Ausfall der ersten elektronischen Steuer- und Regeleinheit A die Druckquelle 2 mittels der zweiten elektronischen Steuer- und Regeleinheit B angesteuert werden kann, um einen Bremsdruck zur Betätigung der Radbremsen 5a-5d während einer Betriebs- oder Regelbremsung aufzubauen, und dass bei einem Ausfall der zweiten elektronischen Steuer- und Regeleinheit B die Druckquelle 2 mittels der ersten elektronischen Steuer- und Regeleinheit A angesteuert werden kann, um einen Druck zur Betätigung der Radbremsen 5a-5d während einer Betriebs- oder Regelbremsung aufzubauen.

Beispielsgemäß ist der Elektromotor als ein doppelt gewickelter Elektromotor 32 mit der ersten Motorwicklung 34a und der zweiten Motorwicklung 34b ausgebildet. Der Elektromotor 32 der Druckquelle 2 wird von der ersten und der zweiten elektronischen Steuer- und Regeleinheit angesteuert in dem Sinne, dass die erste Motorwicklung 34a (bevorzugt nur) von der ersten elektronischen Steuer- und Regeleinheit A (mit Pfeil mit A gekennzeichnet) und die zweite Motorwicklung 34b (bevorzugt nur) von der zweiten elektronischen Steuer- und Regeleinheit B (mit Pfeil mit B gekennzeichnet) angesteuert wird, insbesondere von der elektronischen Steuer- und Regeleinheit mit elektrischer Energie versorgt wird. Dazu ist Motorwicklung 34a mit der ersten Steuer- und Regeleinheit A und die andere Motorwicklung 34b mit der zweiten Steuer- und Regeleinheit B verbunden. Zur Ansteuerung der Druckquelle 2 umfasst jede der beiden Steuer- und Regeleinheiten A, B einen Motorprozessor zur Verarbeitung der Motor-Regelfunktionen, eine Endstufe mit Transistoren zur Bereitstellung der Phasenspannungen am Elektromotor 32 (z.B. B6-Brücke) und eine Treiberstufe (Gate Drive Unit) zur Ansteuerung der Transistoren der Endstufe.

Bei einem Ausfall einer der elektronischen Steuer- und Regeleinheiten A oder B wird die Druckquelle 2 mittels der anderen elektronischen Steuer- und Regeleinheit B oder A angesteuert und es wird ein Druck zur Betätigung der Radbremsen 5a-5d in der brake-by-wire Betriebsart zur Betriebsbremsung aufbaut. Durch die eine funktionsfähige elektronische Steuer- und Regeleinheit B der A wird die Druckquelle 2 bzw. der Elektromotor 34 zumindest mit einem Teil ihrer/seiner Leistung zum Aufbau eines Druckes zur Betätigung der Radbremsen betrieben.

Die elektrisch betätigbaren Einlass- und Auslassventile 6a-6d, 7a-7d, das Trennventil 10 und die Sensoren 40, 42, 43, 44 des Bremssystems 1 sind jeweils nur einer der elektronischen Steuer- und Regeleinheiten zugeordnet. D.h. jedes elektrisch betätigbare Ventil 10, 6a-6d, 7a-7d wird ausschließlich von der elektronischen Steuer- und Regeleinheit A oder ausschließlich von der elektronischen Steuer- und Regeleinheit B angesteuert. Hierdurch werden aufwändige, doppelt ansteuerbare Ventile/Ventilspulen vermieden. Bzw. die Signale jedes Sensors 40, 42, 43 oder 44 werden ausschließlich der elektronischen Steuer- und Regeleinheit A oder ausschließlich der elektronischen Steuer- und Regeleinheit B zugeführt.

Alle elektrisch betätigbaren Ventile, d.h. beispielsgemäß die elektrisch betätigbaren Einlass- und Auslassventile 6a-6d, 7a-7d und das Trennventil 10, sind vorteilhafterweise derselben elektronischen Steuer- und Regeleinheit, beispielsgemäß der elektronischen Steuer- und Regeleinheit A, zugeordnet, und werden ausschließlich von der elektronischen Steuer- und Regeleinheit A angesteuert.

Die Signale des (ersten) Motorwinkelsensors 43 werden der zweiten elektronischen Steuer- und Regeleinheit B zugeführt und von dieser ausgewertet, wohingegen die Signale des (zweiten) Motorwinkelsensors 42 der ersten elektronischen Steuer- und Regeleinheit A zugeführt und von dieser ausgewertet werden.

Die Signale des Drucksensors 40 werden vorteilhafterweise derselben elektronischen Steuer- und Regeleinheit A zugeführt, welche auch die Einlass- und Auslassventile 6a-6d, 7a-7d ansteuert, d.h. die Signale des Drucksensors 40 werden beispielsgemäß der ersten elektronischen Steuer- und Regeleinheit A zugeführt und von dieser ausgewertet.

Nach Ausfall einer der elektronischen Steuer- und Regeleinheiten A oder B kann die Druckquelle 2 dennoch mittels einer der Motorwicklungen 34a oder 34b und eines der Motorwinkelsensoren 42 oder 42 (oder ggf. des Drucksensors 40) angesteuert werden und so ein geeigneter Druck aufgebaut werden, wenn auch ggf. in verminderter Höhe und/oder mit verminderter Dynamik. Mit diesem (Zentral)Druck können alle Radbremsen 5a-5d beaufschlagt werden. Der (Zentral)Druck kann auch mittels vor- und zurückschieben des Kolbens 31 moduliert werden.

Vorteilhafterweise wird das Bremssystem 1 von einem redundanten Bordnetz mit zwei unabhängigen Spannungsquellen (einer ersten elektrischen Energieversorgung und einer zweiten elektrischen Energieversorgung) versorgt, sodass nicht beide Steuer- und Regeleinheiten A und B von der gleichen elektrischen Energieversorgung versorgt werden. Beispielsweise wird Steuer- und Regeleinheiten A von der ersten elektrischen Energieversorgung versorgt und Steuer- und Regeleinheiten B von der zweiten elektrischen Energieversorgung versorgt.

Bremssystem 1 umfasst beispielsgemäß an den Rädern einer der Achsen, beispielsgemäß an den Hinterräder RL, RR, elektrische Parkbremsen 50a, 50b. Die elektrischen Parkbremsen 50a, 50b werden von dem elektrohydraulischen Bremsensteuergerät angesteuert bzw. betätigt.

Vorteilhafterweise sind die Radbremsen der Hinterachse als Kombibremssättel mit einer hydraulischen Radbremse 5c, 5d und einer integrierten, elektrisch betätigbaren Parkbremse (IPB) ausgeführt.

Beispielsgemäß wird eine der elektrischen Parkbremsen, z.B. Parkbremse 50a, von der ersten elektronischen Steuer- und Regeleinheit A betätigt/angesteuert (dies ist durch den Pfeil mit A gekennzeichnet), während die andere der elektrischen Parkbremsen, z.B. Parkbremse 50b, von der zweiten elektronischen Steuer- und Regeleinheit B betätigt/angesteuert wird (dies ist durch den Pfeil mit B gekennzeichnet). Nach einem Ausfall einer der Steuer- und Regeleinheiten A oder B kann das Fahrzeug noch mit zumindest einer der Parkbremsen, welche durch die funktionsfähige Steuer- und Regeleinheit B oder A betätigt wird, gesichert werden. So kann eine Getriebe-Parksperre entfallen.

Bevorzugt umfasst Bremssystem auch eine Betätigungseinheit für einen Fahrzeugführer (nicht dargestellt in Fig. 1). Die Betätigungseinheit ist mit dem Bremsensteuergerät (HECU) signalseitig zur Übermittlung eines Fahrerwunschsignals verbunden, eine mechanisch-hydraulische Verbindung von der Betätigungseinheit zu dem Bremsensteuergerät bzw. den Radbremsen 55a-5d besteht jedoch nicht.

Im Falle eines Ausfalls der zweiten elektronischen Steuer- und Regeleinheit B kann die hydraulische Bremsfunktion des Bremssystems mittels der Druckquelle 2 einschließlich der Raddruckregelung mittels der Einlass- und Auslassventile 6a-6d, 7a-7d anhand der ersten elektronischen Steuer- und Regeleinheit A durchgeführt werden, wobei die einzige Einschränkung gegebenenfalls darin besteht, dass die Leistung der Druckquelle 2 reduziert ist.

Da die Auslassventile 7a-7d stromlos geschlossen und die Einlassventile 6a-6d stromlos offen ausgeführt, können im Falle eines Ausfalls der ersten elektronischen Steuer- und Regeleinheit A alle Räder hydraulisch gebremst werden. Hierzu regelt die zweite elektronische Steuer- und Regeleinheit B das abgegebene Druckmittelvolumen, wenn ihr kein Drucksignal zur Verfügung steht. Eine gemeinsame Druckmodulation an allen Radbremsen 5a-5d bleibt möglich.

Wenn nicht gebremst wird, sollen die Radbremsen 5a-5d unter Atmosphärendruck stehen. Hierzu wird die Druckquelle 2 so angesteuert und in ihren unbetätigten Zustand zurückgefahren, dass über das Schnüffelloch 80 eine hydraulische Verbindung zum Druckmittelvorratsbehälter 3 entsteht, der unter Atmosphärendruck steht.

Bei der Verwendung der Auslassventile 7a-7d zur radindividuellen Druckregelung wird Druckmittelvolumen verbraucht in dem Sinne, dass Druckmittel aus dem Druckraum 30 über die Radbremsen 5a-5d in den Druckmittelvorratsbehälter 3 abgelassen wird. Entsprechend muss spätestens dann Druckmittelvolumen über das Nachsaugventil 14 in den Druckraum 30 der Druckquelle 2 nachgesaugt werden, wenn das Druckmittelvolumen in dem Druckraum 30 einen unteren Grenzwert erreicht.

In dem Ventilblock 20 des Bremssystems besteht keine hydraulische Verbindung zwischen dem Nachsauganschluss 81 und dem zweiten Anschluss 72 des Druckmittelvorratsbehälters 3 und keine hydraulische Verbindung zwischen dem Ausgleichsanschluss 82 und dem ersten Anschluss 71 des Druckmittelvorratsbehälters 3.

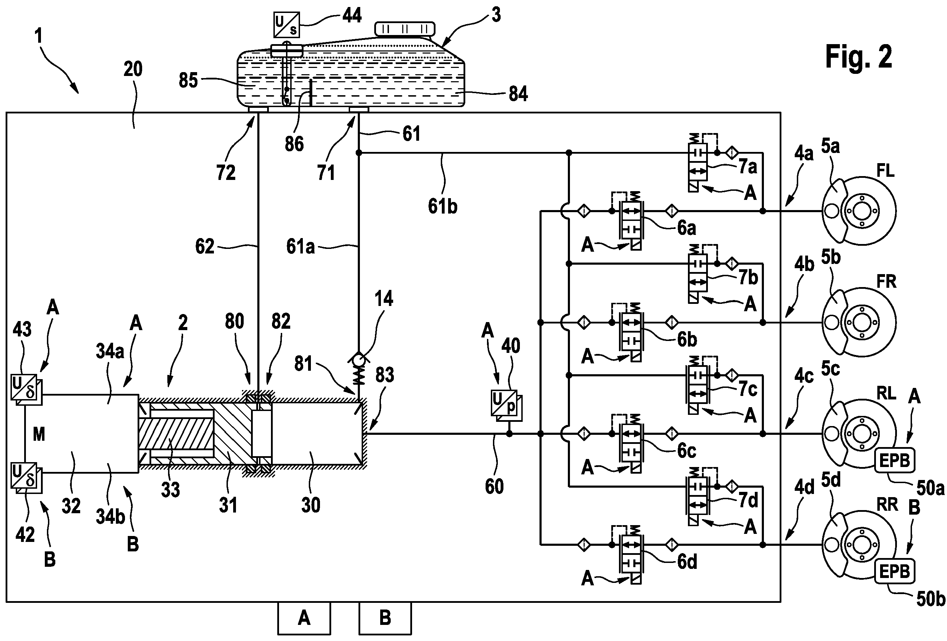

In Fig. 2 ist ein zweites Ausführungsbeispiel eines erfindungsgemäßen Bremssystems 1 für ein Kraftfahrzeug mit vier hydraulisch betätigbaren Radbremsen 5a-5d schematisch dargestellt. Im Unterschied zum ersten Ausführungsbeispiel der Fig. 1 sind kein Trennventil 10, kein Rückschlagventil 9 und keine Rückschlagventile 8a-8d vorgesehen. Druckraum 30 der Druckquelle 2 ist sozusagen direkt mit dem Bremsleitungsabschnitt 60 bzw. den Einlassventilen 6a-6d hydraulisch verbunden, d.h. es ist beispielsgemäß kein elektrisch betätigbares Ventil 10 vorgesehen. Beispielsgemäß ist kein Ventil, auch kein Rückschlagventil, in der hydraulischen Verbindung zwischen dem Druckraum 30 und jedem der Einlassventile 6a-6d angeordnet. Dies bietet den Vorteil geringer Drosselverluste im Hauptstrompfad von der Druckquelle 2 zu den Einlassventilen 6a-6d bzw. den Radbremsen 5a-5d.

Vorteilhafterweise umfasst das beispielsgemäße Bremssystem 1 der Fig. 2 neben den elektrisch betätigbaren Einlass- und Auslassventile 6a-6d, 7a-7d keine weiteren elektrisch betätigbaren Ventile.

Gegenüber einem Bremssystem mit einer Druckquelle, wie sie z.B. aus der DE 10 2017 216 617 A1 bekannt ist, bei welcher sowohl die Nachlaufleitung zum Schnüffelloch als auch die Ansaugleitung mit dem Nachsaugventil mit demselben Anschluss bzw. derselben Behälterkammer des Druckmittelvorratsbehälters verbunden sind und die Rücklaufleitung der Auslassventile mit dem anderen Anschluss bzw. der anderen Behälterkammer des Druckmittelvorratsbehälters verbunden sind, bietet das erfindungsgemäße Bremssystem Vorteile im Falle, dass eine äußere Leckage auftritt, bevor oder während das Kraftfahrzeug abgestellt ist, zum Beispiel bei einer Leckage an einer der Radbremsen oder an der Sekundärmanschette der Druckquelle / des Linearaktuators.

Bei einem solchen Bremssystem mit einer Druckquelle nach dem Stand der Technik wird in diesem Falle bei abgestelltem Fahrzeug die Behälterkammer des Druckmittelvorratsbehälters, die mit der Druckquelle (Linearaktuator) verbunden ist, unter dem Einfluss der Schwerkraft vollständig leerlaufen, und auch der Linearaktuator selbst wird sich zumindest teilweise mit Luft füllen. Danach kann das hydraulische Bremssystem nicht oder nur mit erheblichen Einschränkungen in Betrieb genommen werden.

Dieses Problem kann auch nicht völlig behoben werden, indem der Linearaktuator beim Ausschalten in einer Position abgestellt wird, in der das Schnüffelloch verschlossen ist. Durch Schwankungen in der Umgebungstemperatur kann es zu Druckschwankungen kommen und dadurch kann es nach und nach zu einer Verschiebung des Linearaktuatorkolbens kommen, so dass das Schnüffelloch sich schließlich öffnet.

Das beschrieben Problem bzw. der beschriebene Nachteil wird in den beispielsgemäßen Bremssystemen behoben, indem die zwei Behälteranschlüsse der Druckquelle 2, der Nachsauganschluss 81 und der Ausgleichsanschluss 82, sowie deren Verbindungsleitungen zum Druckmittelvorratsbehälter 3 konsequent getrennt werden. Dabei dient der eine Behälteranschluss, der Nachsauganschluss 81, im allgemeinen Betrieb als Sauganschluss, während der andere Behälteranschluss, der Ausgleichsanschluss 82, in einer bestimmten Motorposition oder Kolbenposition eine atmosphärische Anbindung herstellt. Diese beiden Behälteranschlüsse der Druckquelle 2 sind mit getrennten Behälterkammern 84, 85 des Druckmittelvorratsbehälters 3 verbunden.

Tritt nun bei abgestelltem Fahrzeug eine äußere Leckage auf, so entleert sich zwar die Behälterkammer 85, welche mit dem Ausgleichsanschluss 82 bzw. dem Schnüffelloch 80 verbunden ist, und die Druckquelle 2 bzw. der Druckraum 30 füllt sich teilweise mit Luft. Die Behälterkammer 84, welche mit dem Nachsauganschluss 81 verbunden ist, bleibt aber bis zur Höhe der Schottwand 86 gefüllt. Dabei ist bevorzugt die Feder des Nachsaugventils 14 derart dimensioniert, dass das Nachsaugventil 14 vom hydrostatischen Druck nicht geöffnet wird. Der Druckquelle 2 steht also noch ein Druckmittelvorrat zur Verfügung. Indem die Druckquelle 2 nachsaugt, kann die Druckquelle 2 einen beliebig hohen Druck erzeugen. Die in die Druckquelle 2 eingedrungene Luft kann über die Auslassventile 7a-7d in den Druckmittelvorratsbehälter 3 gespült werden, oder sie entweicht über die Auslassventile 7a-7d, sobald diese im Rahmen einer fahrdynamischen Raddruckmodulation geöffnet werden.

## Patentansprüche

1. Bremssystem (1) für ein Kraftfahrzeug mit mehreren hydraulischen Ausgangsanschlüssen (4a-4d) für hydraulisch betätigbare Radbremsen (5a-5d), einem unter Atmosphärendruck stehenden Druckmittelvorratsbehälter (3) mit einer ersten Behälterkammer (84) und einer zweiten Behälterkammer (85), wobei der ersten Behälterkammer (84) ein erster Anschluss (71) des Druckmittelvorratsbehälters (3) zugeordnet ist und der zweiten Behälterkammer (85) ein zweiter Anschluss (72) des Druckmittelvorratsbehälters (3) zugeordnet ist und wobei die erste und die zweite Behälterkammer (84, 85) durch eine Schottwand (86) zumindest teilweise voneinander getrennt sind, und einer elektrisch ansteuerbaren hydraulischen Druckquelle (2), welche durch eine Zylinder-Kolben-Anordnung mit einem Druckraum (30) und einem Kolben (31) gebildet wird, wobei der Kolben (31) mittels eines Elektromotors (32) vor- und zurückschiebbar ist, wobei die Druckquelle (2) einen Nachsauganschluss (81) zum Nachsaugen von Druckmittel aus dem Druckmittelvorratsbehälter (3) und einen Ausgleichsanschluss (82) zur hydraulischen Verbindung des Druckraums (2) mit dem Druckmittelvorratsbehälter (3) in einer vorgegebenen Position des Kolbens (31) umfasst, wobei ein Druckanschluss (83) der Druckquelle (2) mit den hydraulischen Ausgangsanschlüssen (4a-4d) verbunden ist, **dadurch gekennzeichnet, dass** der Nachsauganschluss (81) über ein Nachsaugventil (14) mit dem ersten Anschluss (71) des Druckmittelvorratsbehälters (3) verbunden ist und der Ausgleichsanschluss (82) mit dem zweiten Anschluss (72) des Druckmittelvorratsbehälters (3) verbunden ist.

2. Bremssystem (1) nach Anspruch 1, **dadurch gekennzeichnet, dass** dieses eine erste elektronische Steuer- und Regeleinheit (A) und eine zweite elektronische Steuer- und Regeleinheit (B) umfasst, wobei der Elektromotor (32) der Druckquelle (2) von der ersten und der zweiten elektronischen Steuer- und Regeleinheit (A, B) ansteuerbar ist.

3. Bremssystem (1) nach Anspruch 1 oder 2, **dadurch gekennzeichnet, dass** der Ausgleichsanschluss (82) ein Schnüffelloch (80) umfasst oder als ein Schnüffelloch ausgebildet ist.

4. Bremssystem (1) nach einem der vorhergehenden Ansprüche, **dadurch gekennzeichnet, dass** der Ausgleichsanschluss (82) über einen Nachlaufleitungsabschnitt (62) mit dem zweiten Anschluss (72) des Druckmittelvorratsbehälters (3) verbunden ist.

5. Bremssystem (1) nach Anspruch 4, **dadurch gekennzeichnet, das**s der Nachlaufleitungsabschnitt (62) nicht mit dem ersten Anschluss (71) des Druckmittelvorratsbehälters (3) verbunden ist.

6. Bremssystem (1) nach einem der vorhergehenden Ansprüche, **dadurch gekennzeichnet, dass** das Nachsaugventil (14) ein in Richtung des Druckraums (30) öffnendes Rückschlagventil ist.

7. Bremssystem (1) nach einem der vorhergehenden Ansprüche, **dadurch gekennzeichnet, dass** der Druckraum (2) in einer unbetätigten Position des Kolbens (31) hydraulisch mit der zweiten Behälterkammer (85) des Druckmittelvorratsbehälters (3) verbunden ist.

8. Bremssystem (1) nach einem der vorhergehenden Ansprüche, **dadurch gekennzeichnet, dass** dieses ein elektrisch betätigbares Auslassventil (7a-7d) je Ausgangsanschluss (4a-4d) umfasst, wobei die Auslassventile (7a-7d) über eine Rücklaufleitung (61b, 61) mit dem ersten Anschluss (71) des Druckmittelvorratsbehälters (3) verbunden sind.

9. Bremssystem (1) nach Anspruch 8, **dadurch gekennzeichnet, dass** der Nachsauganschluss (81) über das Nachsaugventil (14) mit der Rücklaufleitung (61b, 61) verbunden ist.

10. Bremssystem (1) nach einem der vorhergehenden Ansprüche, **dadurch gekennzeichnet, dass** eine Feder des Nachsaugventils (14) derart dimensioniert ist, dass das Nachsaugventil (14) von einem hydrostatischen Druck in der ersten Behälterkammer (84) nicht geöffnet wird.

## Claims

1. A brake system (1) for a motor vehicle, comprising multiple hydraulic output ports (4a-4d) for hydraulically actuatable wheel brakes (5a-5d), a pressure medium reservoir (3), at atmospheric pressure, having a first reservoir chamber (84) and a second reservoir chamber (85), wherein a first port (71) of the pressure medium reservoir (3) is assigned to the first reservoir chamber (84) and a second port (72) of the pressure medium reservoir (3) is assigned to the second reservoir chamber (85), and wherein the first and the second reservoir chamber (84, 85) are at least partially separated from one another by a partition (86), and an electrically activatable hydraulic pressure source (2) which is formed by a cylinder-piston arrangement having a pressure space (30) and a piston (31), wherein the piston (31) can be pushed back and forth by means of an electric motor (32), wherein the pressure source (2) comprises a replenishment port (81) for the replenishment of pressure medium from the pressure medium reservoir (3) and an equalisation port (82) for hydraulically connecting the pressure space (2) to the pressure medium reservoir (3) in a specified position of the piston (31), wherein a pressure port (83) of the pressure source (2) is connected to the hydraulic outlet ports (4a-4d), **characterised in that** the replenishment port (81) is connected via a replenishment valve (14) to the first port (71) of the pressure medium reservoir (3) and the equalisation port (82) is connected to the second port (72) of the pressure medium reservoir (3).

2. The brake system (1) as claimed in claim 1, **characterised in that** this brake system comprises a first electronic open-loop and closed-loop control unit (A) and a second electronic open-loop and closed-loop control unit (B), wherein the electric motor (32) of the pressure source (2) is activatable by the first and the second electronic open-loop and closed-loop control unit (A, B).

3. The brake system (1) as claimed in claim 1 or 2, **characterised in that** the equalisation port (82) comprises a sniffer hole (80) or is designed as a sniffer hole.

4. The brake system (1) as claimed in any one of the preceding claims, **characterised in that** the equalisation port (82) is connected via a breather line section (62) to the second port (72) of the pressure medium reservoir (3).

5. The brake system (1) as claimed in claim 4, **characterised in that** the breather line section (62) is not connected to the first port (71) of the pressure medium reservoir (3).

6. The brake system (1) as claimed in any one of the preceding claims, **characterised in that** the replenishment valve (14) is a check valve that opens in the direction of the pressure space (30).

7. The brake system (1) as claimed in any one of the preceding claims, **characterised in that** the pressure space (2) is hydraulically connected to the second reservoir chamber (85) of the pressure medium reservoir (3) in a non-actuated position of the piston (31).

8. The brake system (1) as claimed in any one of the preceding claims, **characterised in that** this brake system comprises one electrically actuatable outlet valve (7a-7d) per output port (4a-4d), wherein the outlet valves (7a-7d) are connected via a return line (61b, 61) to the first port (71) of the pressure medium reservoir (3).

9. The brake system (1) as claimed in claim 8, **characterised in that** the replenishment port (81) is connected via the replenishment valve (14) to the return line (61b, 61).

10. The brake system (1) as claimed in any one of the preceding claims, **characterised in that** a spring of the replenishment valve (14) is dimensioned such that the replenishment valve (14) is not opened by a hydrostatic pressure in the first reservoir chamber (84).

## Revendications

1. Système de freinage (1) pour un véhicule automobile comprenant plusieurs raccordements de sortie hydrauliques (4a-4d) pour des freins de roue (5a-5d) à commande hydraulique, un réservoir de fluide hydraulique (3) sous pression atmosphérique comprenant une première chambre de réservoir (84) et une seconde chambre de réservoir (85), dans lequel un premier raccordement (71) du réservoir de fluide hydraulique (3) est associé à la première chambre de réservoir (84), et un second raccordement (72) du réservoir de fluide hydraulique (3) est associé à la seconde chambre de réservoir (85), et dans lequel la première et la seconde chambre de réservoir (84, 85) sont au moins partiellement séparées l'une de l'autre par une paroi de séparation (86), et une source de pression hydraulique (2) à commande électrique, laquelle est constituée par un ensemble cylindre-piston comprenant un espace de pression (30) et un piston (31), dans lequel le piston (31) peut être déplacé en va-et-vient au moyen d'un moteur électrique (32), dans lequel la source de pression (2) comprend un raccordement d'aspiration complémentaire (81) destiné à aspirer à nouveau du fluide hydraulique depuis le réservoir de fluide hydraulique (3) et un raccordement d'équilibrage (82) destiné à la mise en communication hydraulique de l'espace de pression (2) avec le réservoir de fluide hydraulique (3) dans une position prédéterminée du piston (31), dans lequel un raccordement de pression (83) de la source de pression (2) est relié aux raccordements de sortie hydrauliques (4a-4d), **caractérisé en ce que** le raccordement d'aspiration complémentaire (81) est relié, par l'intermédiaire d'une vanne d'aspiration complémentaire (14), au premier raccordement (71) du réservoir de fluide hydraulique (3), et le raccordement d'équilibrage (82) est relié au second raccordement (72) du réservoir de fluide hydraulique (3).

2. Système de freinage (1) selon la revendication 1, **caractérisé en ce que** celui-ci comprend une première unité électronique de commande et de régulation (A) et une seconde unité électronique de commande et de régulation (B), dans lequel le moteur électrique (32) de la source de pression (2) peut être commandé par la première et la seconde unité électronique de commande et de régulation (A, B).

3. Système de freinage (1) selon la revendication 1 ou 2, **caractérisé en ce que** le raccordement d'équilibrage (82) comprend un trou de reniflard (80) ou est réalisé sous la forme d'un trou de reniflard.

4. Système de freinage (1) selon l'une quelconque des revendications précédentes, **caractérisé en ce que** le raccordement d'équilibrage (82) est relié, par l'intermédiaire d'une section de conduite de retour (62), au second raccordement (72) du réservoir de fluide hydraulique (3).

5. Système de freinage (1) selon la revendication 4, **caractérisé en ce que** la section de conduite de retour (62) n'est pas reliée au premier raccordement (71) du réservoir de fluide hydraulique (3).

6. Système de freinage (1) selon l'une quelconque des revendications précédentes, **caractérisé en ce que** la vanne d'aspiration complémentaire (14) est un clapet anti-retour s'ouvrant en direction de l'espace de pression (30).

7. Système de freinage (1) selon l'une quelconque des revendications précédentes, **caractérisé en ce que** l'espace de pression (2) est relié hydrauliquement à la seconde chambre de réservoir (85) du réservoir de fluide hydraulique (3) dans une position non actionnée du piston (31).

8. Système de freinage (1) selon l'une quelconque des revendications précédentes, **caractérisé en ce que** celui-ci comprend une vanne de sortie (7a-7d) à commande électrique pour chaque raccordement de sortie (4a-4d), dans lequel les vannes de sortie (7a-7d) sont reliées au premier raccordement (71) du réservoir de fluide hydraulique (3) par l'intermédiaire d'une conduite de retour (61b, 61).

9. Système de freinage (1) selon la revendication 8, **caractérisé en ce que** le raccordement d'aspiration complémentaire (81) est relié à la conduite de retour (61b, 61) par l'intermédiaire de la vanne d'aspiration complémentaire (14).

10. Système de freinage (1) selon l'une quelconque des revendications précédentes, **caractérisé en ce qu'**un ressort de la vanne d'aspiration complémentaire (14) est dimensionné de telle manière que la vanne d'aspiration complémentaire (14) n'est pas ouverte par une pression hydrostatique dans la première chambre de réservoir (84).
